# EUROPEAN PATENT SPECIFICATION

(11) **EP 1 543 246 B1**
(45) Date of publication and mention of the grant of the patent: **09.04.2008**
(21) Application number: 03798097.6
(22) Date of filing: 30.06.2003
(51) Int. Cl.: F16B 7/04, F16B 21/02, F16B 11/00

(54) **DEVICE AND METHOD FOR CONNECTING PROFILES**
VORRICHTUNG UND VERFAHREN ZUR VERBINDUNG VON PROFILEN
DISPOSITIF ET PROCEDE D'ASSEMBLAGE DE PROFILES

(30) Priority: 24.09.2002 IT MI20022016
(43) Date of publication of application: 22.06.2005
(73) Proprietor: Top Glass S.p.A., 25128 Brescia (IT)
(72) Inventor: BRANCA, Alfonso, I-20145 Milano (IT)
(74) Representative: Rapisardi, Mariacristina
(86) International application number: PCT/EP2003/006936
(87) International publication number: WO 2004/029467

(56) References cited:
- DE-U- 7 119 423
- FR-A- 2 721 074
- US-A- 4 981 735
- US-A1- 2001 017 019

## Description

The present invention relates to a device and a method for connecting profiles.

In particular in the following description, reference shall be made to devices for connecting profiles made of a composite material with plastic material matrix, such as for example plastic reinforced by fibre glass.

The use of profiles made of composite material has widely spread and in some applications, it has replaced the use of profiles made of a metal material, thanks to the features of the material, which can be summarised in high resistance to fire and/or to high temperatures, together with good mechanical properties and lack of corrosion problems.

Of course, such profiles are used in combination with other profiles for realising variously complex structures that should be capable of performing their functions, such as off-shore applications and the realisation of grids.

However, the realisation of connections between the various profiles exhibits considerable disadvantages; in fact, it is very dangerous to realise nailed or bolted connections since very high internal tensions generate into the profile portions gripped between the bolts, which can cause the profile to break, with easily imaginable negative consequences, sometimes also due to the different thermal expansion levels of the components.

Moreover, metal or similar mechanical connections do not provide resistance to high temperatures and/or to fire, are very complex, require appropriate equipment, and are difficult to realise using automated systems. DE 7119 423 U discloses a connection device according to preamble of claim 1.

The technical task of the present invention therefore is that of realising a device and a method for connecting profiles, which should allow eliminating the above technical disadvantages of the prior art.

Within this technical task, an object of the invention is that of realising a device and a method which should allow connecting to one another profiles made of a composite material, such as plastic reinforced by fibre glass, which should exhibit a high resistance to high temperatures and/or to fire without the risk of mechanical weakening portions of the profiles during connection and eliminating the risk of residue tensions of the profiles after the connection, as may be generated by the nails or bolts applied.

Another object of the invention is that of realising a device and a method which should be applicable in a flexible manner, adapting them to the specific construction circumstances and in an automated manner; for example, the device can be applied in two mutually opposed directions (that is, turned by 180°) and the connection procedure can provide for a clockwise or a counter clockwise rotation.

Last but not least, another object of the invention is that of realising a device and a method for connecting profiles which should be applicable using known tools, such as for example simple spanners, so as to facilitate the application work of the operators or of the automatic machine and which should exhibit an efficient and lasting connection over time.

The technical task, as well as these and other objects according to the present invention, are achieved by realising a combination of profiles and a device for connecting said profiles according to claim 1.

The present finding also relates to a method for connecting profiles, according to claim 18.

Further features and advantages of the invention will appear more clearly from the description of a preferred but not exclusive embodiment of the device and of the method for connecting profiles according to the finding, where the device is illustrated by way of a non-limiting example in the attached drawings. In such drawings:

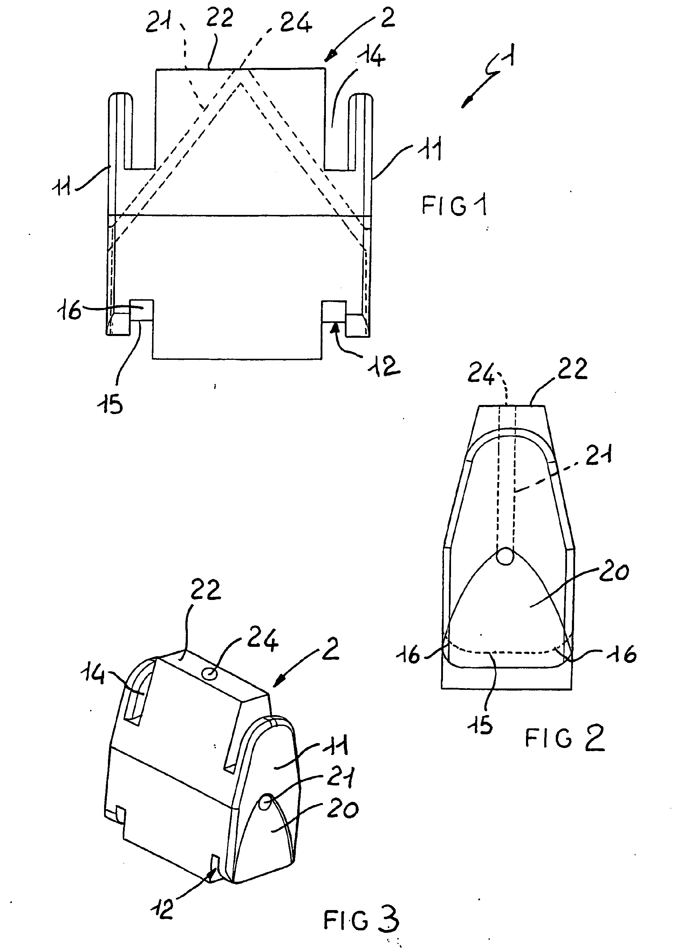

- Figure 1 shows a front elevation view of a device according to the present finding;
- Figure 2 shows a side elevation view of the device of figure 1;
- Figure 3 shows a perspective view of the device of figure 1;

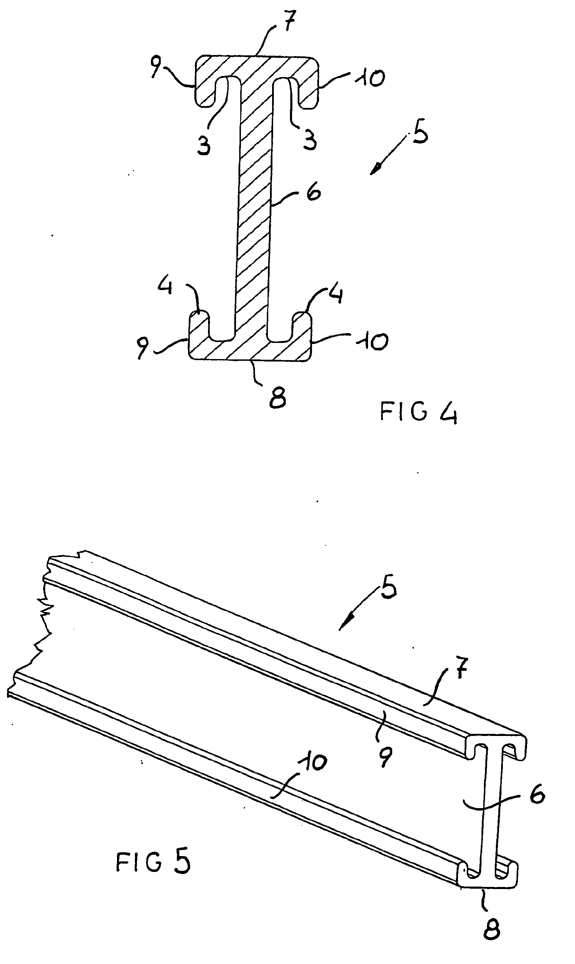

- Figure 4 shows a cross section of a profile that can house the device according to the present finding;
- Figure 5 shows a perspective view of the profile of figure 4; and
- Figure 6 shows a section of a device according to the finding, connected to two profiles.

With reference to the above figures, there is shows a device for connecting profiles globally indicated with reference numeral 1.

The device for connecting profiles comprises a body 2 exhibiting, on each of its opposed walls, first and second connecting means adapted for respectively engaging on a first and second portion 3 and 4 of each of the profiles globally indicated with reference numeral 5.

Advantageously, as it will be better explained hereinafter, the first and the second portion 3 and 4 are at different distances from the axis of profile 5 and in particular, the first portion 3 is at a smaller distance from said axis than the second portion 4.

For more descriptive clarity, it is noted that profiles 5 exhibit a section shaped as a double upturned T, so as to exhibit a central member 6 from the ends of which a first and a second face 7 and 8 opposed to one another and orthogonal to it extend.

At their ends, the first and second face 7 and 8 exhibit first and second folds 9 and 10. '

In particular, the first connecting means comprises a wing 11 spaced from body 2 by a quantity forming a housing 14 substantially equivalent to the thickness of the first and second folds 9 and 10 and more precisely, such as to create a predetermined friction upon connection.

The second connecting means comprises a seat 12 substantially exhibiting a length equivalent to the thickness of said first and second folds 9 and 10 of the second face 8.

The first portion 3 of the profile is realised by the slot defined between the first and second folds 9 and 10 of the first face 7 whereas the second portion 4 of said profile is defined by the ends of the first and second folds 9 and 10 of the second face 8.

Wing 11 exhibits a tapered shape with rounded end, so as to allow its rotation without interference during the connection of the device with the profiles.

Seat 12 exhibits a length substantially equal to the length to the thickness of body 2 (but of course it can be of the desired length according to the requirements) and comprises a central rectilinear portion 15 and the two end rounded portions 16, so as to allow the rotation of body 2 during its connection to the profile without any interference.

Advantageously, the walls of both wing 11 and of seat 12 are slightly inclined for determining, during their connection with said slot 3 of the first face 7 and said end 4 of the first and second folds 9 and 10 of the second face 8 both a recovery of any backslash and a predetermined friction during the fixing to the profile.

In this way, the wing advantageously engages with slot 3, which is stiff, whereas the rectilinear portion 15 and the rounded end portions 16 elastically work on the first and second folds 9 and 10 of the second face 8, which is therefore subject - during the connection - to a limited bending moment, allowing at the same time the connection and the hold by an elastic return on portion 4 which, as seen, exhibits a high connection width.

As seen, the device is perfectly symmetrical and realised in a single piece and in a material that can stand both high temperatures and fire, also allowing the association to the profile or profiles in any position by a clockwise and counter clockwise rotation and by 180 degrees as well.

The device further comprises, on each wing 11, a lowered portion 20 and a channel 21 communicating with it and with an outside surface 22 of the body for the passage of an adhesive.

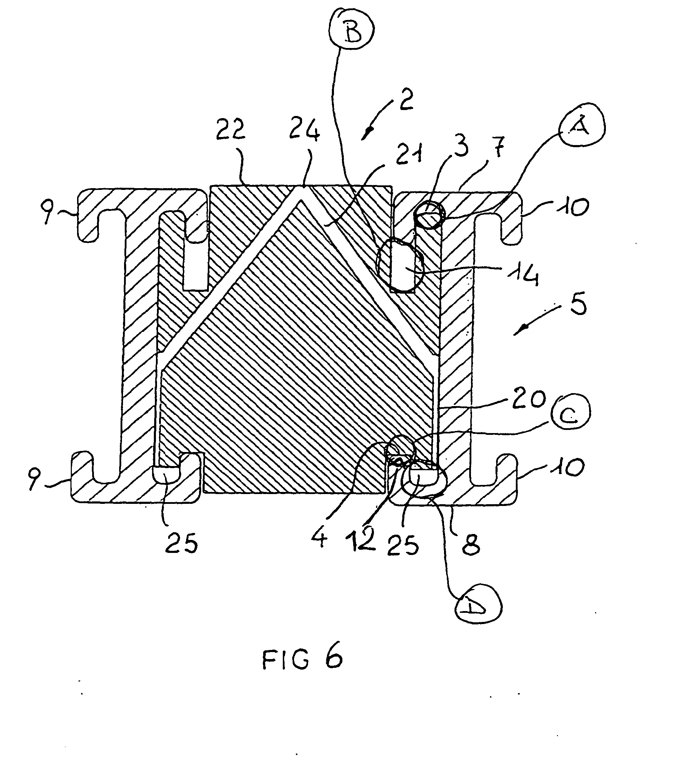

In particular, as shown in fig. 6, since the device is symmetrical the two channels 21 will both converge into the same adhesive inlet 24.

The raised portion 20 exhibits a substantially triangular shape so as to facilitate the adhesive flow inside an interspace 25 formed with wing 11 and the second face 8 and adapted for collecting the adhesive in such way as to ensure a further considerable holding force between the devices and the profiles after their mutual connection.

Of course, besides being quadrangular to be easily rotated by any wrench of tool, body 2 can exhibit an extension, not shown, for attaching other optional accessories.

Another object of the present patent is a method for connecting profiles, which consists in arranging at least a first and a second double-T profile sided to one another, realised according to the above description, and in introducing the device described above between the first and second folds 9 and 10 for example of a first and second profile.

Wings 11 are introduced into the first and second profile (the example of course also applies to a plurality of profiles to be connected) between the first and second faces 7 and 8 with longitudinal axis arranged along the development of the profile itself.

Then, said wings are rested onto the central element 6 of the first and second profile and body 2 is turned in clockwise or counter clockwise direction by about 90 degrees for respectively engaging both wings 11 into the first portion 3 of both profiles and seat 12 with end 4 of the first and second folds 9 and 10 of the second faces 8 of both the first and second profile as shown in fig. 6.

Once more devices have been connected profiles according to the requirements (they can be connected or disconnected several times), it is possible to introduce an adhesive into an inlet 24 so as permanently connect said device to said device.

Advantageously, moreover, on the surface facing towards the central element of each wing 11 there is at least one rib (not represented in the drawings) suitable for recovering possible clearances between the two surfaces during the coupling of the connection device with the profiles.

The rib can have rectilinear extension or, in a preferred solution, curvilinear extension so as not to block the rotation of the connection device during its application but, on the contrary, to guide it during such an operation.

Moreover, whether the rib be rectilinear or curvilinear it has a tapered shape, i.e, higher in the central part and lower in the two opposite end parts with respect to the central part.

In this way a progressive engagement of the rib with the central element 6 is obtained during the rotation operation.

In a variant embodiment, moreover, the housing 14 can have a depth equal to the length of the wings 9 and 10 so that said wings engage with the base of the housing 14.

The operation of the device for connecting profiles according to the invention is evident from what described and illustrated and in particular, it substantially is as follows.

When the device is applied, the mechanical hold action ensured by wings 11 into slots 3 and by ends 4 of folds 9 and 10 of the second face 8 into seats 12 and of the adhesive inserted into the lowered portions 20 ensures the connection of each profile to the device and therefore ensures the mutual connection between profiles 5 in an equally spaced manner.

The devices can be applied along the profiles in any position also adapted for allowing shortening predetermined profiles in case of need.

Advantageously, seats 12 are provided with a wide rectilinear surface for resting against the profiles so as to distribute the strains and prevent concentrated stresses that could be very harmful and exhibit low resistance to stresses.

Advantageously, the rotation can be either clockwise or counter clockwise and thanks to the symmetry of the profiles, the device can be applied in one and in the opposed direction on the profiles; this allows obtaining a great flexibility in the assembly, also automated, of the profiles.

In the practice it has been noted that the device and the method for connecting profiles according to the invention are especially advantageous since they allow realising structures made of a composite material, such as plastic reinforced by fibre glass with matrix made of plastic material, very strong and resistant with a high resistance to corrosion and to fire and in an automated manner.

Several changes and variants can be made to the device and the method for connecting profiles thus conceived, all falling within the scope of the inventive concept; moreover, all details can be replaced by technically equivalent elements.

In the practice the materials used as well as the sizes, can be of any type according to the requirements in to the prior art.

## Claims

1. Combination of profiles (5) and a device (1) for connecting said profiles (5) wherein said device comprises a body exhibiting on each of its opposed walls first connecting means comprising a wing (11) and second connecting means comprising a seat (12), adapted for respectively engaging on a first (3) and second **(4) portion of each of said profiles, characterised in that said first (3) and second** (4) portion being at different distances from the axis of said profile (5), first portion (3) being at a smaller distance from said axis that said second portion (4), said wing (11) exhibiting a tapered shape, said seat (12), exhibiting a length substantially equivalent to the thickness of said body (2) and comprising a central rectilinear portion (15) and the two end portions rounded (16), said wing working into one stiff slot defining said first portion (3), whereas said rectilinear portion (15) and said rounded end portions (16) elastically working on one fold (9, 10) defining said second portion (4).

2. Combination according to previous claim, **characterised in that** said profiles (5) exhibit a section shaped as a double upturned T, so as to exhibit a central member (6) from the ends of which a first (7) and a second (8) face and opposed to one another and orthogonal to it extend, said first (7) and second (8) face exhibiting first (9) and second (10) of said fold at the ends.

3. Combination according to one or more of the previous claims, **characterised in that** said wing (11) is spaced from said body (2) by a quantity substantially equivalent to the thickness of said first (9) and second (10) folds.

4. Combination according to one or more of the previous claims, **characterised in that** said seat (12) substantially exhibiting a length equivalent to the thickness of said first (9) and second (10) folds.

5. Combination according to one or more of the previous claims, **characterised in that** said slot is defined between said first (9) and second (10) folds and said first face (7).

6. Combination according to one or more of the previous claims, **characterised in that** said second portion (4) of said profile (5) is defined by the ends of said first and second folds (9,10) of said second face (8).

7. Combination according to one or more of the previous claims, **characterised in that** the walls of said wing (11) and of said seat (12) are slightly inclined for determining, during their connection with said slot and said end of said first and second folds (9,10) of said second face (8), a recovery of any backslash and a friction during the fixing.

8. Combination according to one or more of the previous claims, **characterised in that** it is perfectly symmetrical.

9. Combination according to one or more of the previous claims, **characterised in that** it can be associated to said profile (5) by indifferently turning it in clockwise or counter clockwise direction.

10. Combination according to one or more of the previous claims, **characterised in that** on said wing (11) it comprises a lowered portion (20) and a channel (21) communicating with it and with an outside surface (22) of said body for the passage of an adhesive.

11. Combination according to the previous claim, **characterised in that** said lowered portion (20) exhibits a substantially triangular shape.

12. Combination according to one or more of the previous claims, **characterised in that** said second face (8) forms an interspace (25) with said win (11) adapted for housing said adhesive.

13. Combination according to one or more of the previous claims, **characterised in that** each wing (11) has its surface facing said central element (6) equipped with at least one rib suitable for the recovery of possible clearances.

14. Combination according to the previous claim, **characterised in that** said rib has a curvilinear and tapered shape.

15. Combination according to claim 12, **characterised in that** the base of said housing (14) engages with said wings.

16. Combination according to one or more of the previous claims, **characterised in that** said body (2) exhibits an extension for the connection of accessories.

17. Combination according to one or more of the previous claims, **characterised in that** it is realised in a single piece in a material resistant to high temperatures and/or to fire.

18. Method of connecting profiles (s) by a connection device (1) for an assembly according to one or more previous claims, **characterised in** : engaging said ring (11) with said slot which is stiff:
engaging said rectilinear portion (15) and said mounded end portions (16) on said first and second folds (9,10) of said second face (8);
and subjecting said second face (3) to a bending moment allowing at the same time the connection and the hold by an elastic return on said second portion (4).

19. Method according to the previous claim, **characterised by** the introduction of an adhesive between said device and each of said first and second profile so as to connect said device to said profiles.

20. Device and method for connecting profiles, **characterised in that** said device and/or said profiles comprise plastic material.

## Patentansprüche

1. Verbindung von Profilen (5) sowie eine Vorrichtung (1), um die besagten Profile (5) zu befestigen, wobei die besagte Vorrichtung einen Körper umfasst, der an jeder seiner gegenüberliegenden Wände erste Verbindungsmittel aufweist, welche einen Flügel (11) umfassen, sowie zweite Verbindungsmittel, welche einen Sitz (12) umfassen, die dafür geeignet ist, jeweils auf einem ersten (3) und einem zweiten (4) Abschnitt auf jedem der besagten Profile eingerastet zu werden, **dadurch gekennzeichnet, dass** der besagte erste (3) und zweite (4) Abschnitt sich in unterschiedlichen Entfernungen von der Achse des besagten Profils (5) befinden, wobei der erste Abschnitt (3) sich in einer geringeren Entfernung von der besagten Achse als der besagte zweite Abschnitt (4) befindet, dabei weist der besagte Flügel (11) eine sich verjüngende Form auf, der besagte Sitz (12) weist eine Länge auf, welche wesentlich mit der Dicke des besagten Körpers (2) übereinstimmt, und einen zentralen gradlinigen Abschnitt (15) sowie die zwei abgerundeten Endabschnitte (16) umfasst, wobei der besagte Flügel in einem steifen Schlitz arbeitet, welcher den ersten Abschnitt (3) bestimmt, wohingegen der besagte gradlinige Abschnitt (15) sowie die besagten abgerundeten Endabschnitte (16) elastisch auf einer Falte (9, 10) arbeiten, welche den besagten zweiten Abschnitt (4) bestimmt.

2. Verbindung nach dem vorherigen Anspruch, **dadurch gekennzeichnet, dass** die besagten Profile (5) einen Abschnitt aufweisen, welcher wie ein doppelt hochgeschlagenes T geformt ist, um ein zentrales Element (6) zu zeigen, von dessen Enden sich eine erste (7) und zweite (8) Fläche, welche entgegengesetzt zueinander und rechtwinklig dazu sind, ausdehnen, wobei die besagte erste (7) und zweite (8) Fläche erste (9) und zweite (10) der besagten Falten an den Enden aufweisen.

3. Verbindung nach einem oder mehr der vorherigen Ansprüche, **dadurch gekennzeichnet, dass** der besagte erste Flügel (11) vom besagten Körper (2) eine Entfernung aufweist, welche wesentlich mit der Dicke der besagten ersten (9) und zweiten (10) Falten übereinstimmt.

4. Verbindung nach einem oder mehr der vorherigen Ansprüche, **dadurch gekennzeichnet, dass** der besagte Sitz (12) wesentlich eine Länge aufweist, welche mit der Dicke der besagten ersten (9) und zweiten (10) Falten übereinstimmt.

5. Verbindung nach einem oder mehr der vorherigen Ansprüche, **dadurch gekennzeichnet, dass** der besagte Schlitz zwischen den besagten ersten (9) und zweiten (10) Falten sowie der besagten ersten Fläche (7) bestimmt wird.

6. Verbindung nach einem oder mehr der vorherigen Ansprüche, **dadurch gekennzeichnet, dass** der besagte zweite Abschnitt (4) des besagten Profils (5) durch die Enden der besagten ersten und zweiten Falten (9, 10) der besagten zweiten Fläche (8) bestimmt wird.

7. Verbindung nach einem oder mehr der vorherigen Ansprüche, **dadurch gekennzeichnet, dass** die Wände des besagten Flügels (11) sowie des besagten Sitzes (12) leicht geneigt sind, um während ihrer Verbindung mit dem besagten Schlitz und dem besagten Ende der besagten ersten und zweiten Falten (9, 10) der besagten zweiten Fläche (8) eine Wiedergewinnung von Rückstössen sowie eine Reibung während der Befestigung zu bestimmen.

8. Verbindung nach einem oder mehr der vorherigen Ansprüche, **dadurch gekennzeichnet, dass** sie perfekt symmetrisch ist.

9. Verbindung nach einem oder mehr der vorherigen Ansprüche, **dadurch gekennzeichnet, dass** sie mit dem besagten Profil (5) verbunden werden kann, indem sie entweder im Uhrzeigersinn oder gegen den Uhrzeigersinn gedreht wird.

10. Verbindung nach einem oder mehr der vorherigen Ansprüche, **dadurch gekennzeichnet, dass** sie auf dem besagten Flügel (11) einen unteren Abschnitt (20) sowie einen Kanal (21) umfasst, welche mit ihr und einer Außenfläche (22) des besagten Körpers in Kontakt stehen, um ein Klebemittel hindurch zu lassen.

11. Verbindung nach dem vorherigen Anspruch, **dadurch gekennzeichnet, dass** der besagte untere Abschnitt (20) eine wesentlich dreieckige Form aufweist.

12. Verbindung nach einem oder mehr der vorherigen Ansprüche, **dadurch gekennzeichnet, dass** die besagte zweite Fläche (8) einen Zwischenraum (25) mit dem besagten Flügel (11) bildet, welcher geeignet ist, das besagte Klebemittel aufzunehmen.

13. Verbindung nach einem oder mehr der vorherigen Ansprüche, **dadurch gekennzeichnet, dass** die Oberfläche von jedem Flügel (11) zum zentralen Element (6) gewandt ist, wobei es mit mindestens einer Rippe ausgestattet ist, welche für die Beseitigung von möglichen Abständen geeignet ist.

14. Verbindung nach dem vorherigen Anspruch, **dadurch gekennzeichnet, dass** die besagte Rippe eine gekrümmte und sich verjüngende Form besitzt.

15. Verbindung nach Anspruch 12, **dadurch gekennzeichnet, dass** der Boden des besagten Gehäuses (14) mit den besagten Flügeln einrastet.

16. Verbindung nach einem oder mehr der vorherigen Ansprüche, **dadurch gekennzeichnet, dass** der besagte Körper (2) eine Ausdehnung aufweist, um Zubehörteile zu befestigen.

17. Verbindung nach einem oder mehr der vorherigen Ansprüche, **dadurch gekennzeichnet, dass** sie einstückig aus einem bei hohen Temperaturen und/oder bei Feuer beständigen Material gefertigt wurde.

18. Methode zur Befestigung von Profilen (5) mittels einer Befestigungsvorrichtung (1) für eine Montage nach einem oder mehr der vorherigen Ansprüche, **dadurch gekennzeichnet, dass**: der besagte Flügel (11) mit dem besagten steifen Schlitz eingerastet wird; der besagte gradlinige Abschnitt (15) und die besagten abgerundeten Endabschnitte (16) auf den besagten ersten und zweiten Falten (9, 10) der besagten zweiten Fläche (8) eingerastet werden; sowie **dadurch**, dass die besagte zweite Fläche (8) einem Biegemoment unterzogen wird, welches gleichzeitig die Befestigung und den Halt mittels einer elastischen Rückkehr auf dem besagten zweiten Abschnitt (4) ermöglicht.

19. Methode nach dem vorherigen Anspruch, **dadurch gekennzeichnet, dass** ein Klebemittel zwischen der besagten Vorrichtung und jedem der besagten ersten und zweiten Profile eingeführt wird, um die besagte Vorrichtung an die besagten Profilen zu befestigen.

20. Vorrichtung sowie Methode für die Befestigung von Profilen, **dadurch gekennzeichnet, dass** die besagte Vorrichtung und/oder die besagten Profile Kunststoffmaterialien umfassen.

## Revendications

1. Combinaison de profilés (5) et un dispositif (1) pour relier lesdits profilés (5), où ledit dispositif comporte un corps présentant sur chacune de ses parois opposées des premiers moyens de raccordement comportant un volet (11) et des seconds moyens de raccordement comportant un siège (12), aptes à s'emboîter respectivement sur une première (3) et une seconde (4) portion de chacun desdits profilés, **caractérisée en ce que** ladite première (3) et seconde (4) portions se trouvent à des distances différentes par rapport à l'axe dudit profilé (5), la première portion (3) se trouvant à une distance de ledit l'axe plus courte que celle de ladite seconde portion (4), ledit volet (11) présentant une forme conique, ledit siège (12) présentant une longueur sensiblement équivalente à l'épaisseur dudit corps (2) et comportant une portion rectiligne centrale (15) et les deux portions des extrémités arrondies (16), ledit volet agissant dans une fente raide définissant ladite première portion (3), tandis que ladite portion rectiligne (15) et lesdites portions des extrémités arrondies (16) agissent élastiquement sur un pli (9, 10) définissant ladite seconde portion (4).

2. Combinaison selon la revendication précédente, **caractérisée en ce que** lesdits profilés (5) présentent une section ayant la forme d'un double T renversé, de façon à présenter un membre central (6) depuis les extrémités duquel une première (7) et une seconde (8) face, l'une vis-à-vis de l'autre et orthogonales par rapport à celui-ci, s'étendent, ladite première (7) et seconde (8) faces présentant un premier (9) et un second (10) desdits plis aux extrémités.

3. Combinaison selon l'une ou plusieurs des revendications précédentes, **caractérisée en ce que** ledit volet (11) est écarté dudit corps (2) par une quantité sensiblement équivalente à l'épaisseur desdits premier (9) et second (10) plis.

4. Combinaison selon l'une ou plusieurs des revendications précédentes, **caractérisée en ce que** ledit siège (12) présente sensiblement une longueur équivalente à l'épaisseur desdits premier (9) et second (10) plis.

5. Combinaison selon l'une ou plusieurs des revendications précédentes, **caractérisée en ce que** ladite fente est définie entre lesdits premier (9) er second (10) plis et ladite première face (7).

6. Combinaison selon l'une ou plusieurs des revendications précédentes, **caractérisée en ce que** ladite seconde portion (4) dudit profilé (5) est définie par les extrémités desdits premier et second plis (9, 10) de ladite seconde face (8).

7. Combinaison selon l'une ou plusieurs des revendications précédentes, **caractérisée en ce que** les parois dudit volet (11) et dudit siège (12) sont légèrement inclinées pour déterminer, pendant leur raccordement avec ladite fente et ladite extrémité desdits premier et second plis (9, 10) de ladite seconde face (8), une récupération de tout antislash et un frottement pendant la fixation.

8. Combinaison selon l'une ou plusieurs des revendications précédentes, **caractérisée en ce qu'**il est parfaitement symétrique.

9. Combinaison selon l'une ou plusieurs des revendications précédentes, **caractérisée en ce qu'**il peut être associée avec ledit profilé (5) en le faisant tourner indifféremment dans le sens des aiguilles d'une montre ou dans le sens inverse à celui des aiguilles d'une montre.

10. Combinaison selon l'une ou plusieurs des revendications précédentes, **caractérisée en ce que**, sur ledit volet (11), elle comporte une portion baissée (20) et un canal (21) communiquant avec celle-ci et avec une surface extérieure (22) dudit corps pour le passage d'un adhésif.

11. Combinaison selon la revendication précédente, **caractérisée en ce que** ladite portion baissée (20) présente une forme sensiblement triangulaire.

12. Combinaison selon l'une ou plusieurs des revendications précédentes, **caractérisée en ce que** ladite seconde face (8) forme un interstice (25) avec ledit volet (11) apte à loger ledit adhésif.

13. Combinaison selon l'une ou plusieurs des revendications précédentes, **caractérisée en ce que** chaque volet (11) a sa surface vis-à-vis dudit élément central (6) équipée d'au moins une nervure apte à récupérer tout intervalle éventuel.

14. Combinaison selon la revendication précédente, **caractérisée en ce que** ladite nervure a une forme curviligne et conique.

15. Combinaison selon la revendication 12, **caractérisée en ce que** la base dudit logement (14) s'emboîte avec lesdits volets.

16. Combinaison selon l'une ou plusieurs des revendications précédentes, **caractérisée en ce que** ledit corps (2) présente une extension pour le raccordement des accessoires.

17. Combinaison selon l'une ou plusieurs des revendications précédentes, **caractérisée en ce qu'**il est réalisé dans une pièce unique d'un matériau résistant aux hautes températures et/ou au feu.

18. Méthode pour relier des profilés (5) à un dispositif de raccordement (1) pour un ensemble selon l'une ou plusieurs des revendications précédentes, **caractérisée en ce** qui suit : emboîtement dudit volet (11) avec ladite fente qui est raide ; emboîtement de ladite portion rectiligne (15) et de lesdites portions des extrémités arrondies (16) sur lesdits premier et second plis (9, 10) de ladite seconde face (8) ; et soumission de ladite seconde face (8) à un moment de flexion permettant simultanément le raccordement et le soutien par un rappel élastique sur ladite seconde portion (4).

19. Méthode selon la revendication précédente, **caractérisée par** l'introduction d'un adhésif entre ledit dispositif et chacun desdits premier et second profilés de façon à relier ledit dispositif susdit à lesdits profilés.

20. Dispositif et méthode pour relier des profilés, **caractérisés en ce que** ledit dispositif et/ou lesdits profilés comportent une matière plastique.
